(19) Europäisches Patentamt
European Patent Office
Office européen des brevets

(11) EP 3 867 285 B1

(12) EUROPEAN PATENT SPECIFICATION

(45) Date of publication and mention of the grant of the patent:
**12.10.2022 Bulletin 2022/41**

(21) Application number: **19809195.1**

(22) Date of filing: **17.10.2019**

(51) International Patent Classification (IPC):
***C08F 2/00*** *(2006.01)* ***C08L 23/12*** *(2006.01)*

(52) Cooperative Patent Classification (CPC):
(C-Sets available)
**C08F 2/001; C08F 210/06; C08L 23/12;**
C08L 2207/02 (Cont.)

(86) International application number:
**PCT/JP2019/041813**

(87) International publication number:
**WO 2020/080555 (23.04.2020 Gazette 2020/17)**

(54) **POLYPROPYLENE COMPOSITION AND MOLDED ARTICLE**

POLYPROPYLENZUSAMMENSETZUNG UND FORMARTIKEL

COMPOSITION DE POLYPROPYLÈNE ET ARTICLE MOULÉ

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **18.10.2018 JP 2018196745**

(43) Date of publication of application:
**25.08.2021 Bulletin 2021/34**

(73) Proprietor: **Basell Poliolefine Italia S.r.l.**
**20121 Milano (IT)**

(72) Inventors:
- **NAKAJIMA, Takeshi**
**Kawasaki-shi, Kanagawa 2100863 (JP)**
- **YAMAMOTO, Kunio**
**Kawasaki-shi, Kanagawa 2100863 (JP)**
- **UCHIDA, Masashi**
**Kawasaki-shi, Kanagawa 2100863 (JP)**

(74) Representative: **LyondellBasell**
**c/o Basell Poliolefine Italia**
**Intellectual Property**
**P.le Donegani 12**
**44122 Ferrara (IT)**

(56) References cited:
**WO-A1-2017/178191**
**JP-A- 2016 089 012**
**US-A1- 2011 207 883**
**US-A1- 2018 237 624**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

(52) Cooperative Patent Classification (CPC): (Cont.)

C-Sets
**C08F 210/06, C08F 2/001;**
**C08F 210/06, C08F 4/651;**
**C08L 23/12, C08L 23/16**

## Description

### Technical Field

The present invention relates to polypropylene compositions and molded articles thereof, and more particularly to polypropylene compositions for injection molding and injection-molded articles thereof.

### Background Art

Housings of home electric appliances are required to be superior in mechanical characteristics such as stiffness and low temperature impact resistance, and in appearance such as gloss. Conventionally, housings of home electric appliances have been produced using ABS resin, but from the viewpoint of cost reduction, studies have been made to explore the feasibility of using a polypropylene composition as an alternative to this resin. For example, PTL 1 discloses a colored composition obtained by polymerizing a copolymer rubber of ethylene and an $\alpha$-olefin having 3 to 10 carbon atoms in the presence of homo- or random polypropylene using a catalyst comprising a phthalate-based compound as an internal electron donor compound.

PTL 2 discloses a propylene polymer composition for replacing an ABS resin, whose composition comprises a propylene polymer containing 99.5% or more by weight of a propylene unit and an ethylene/1-butene copolymer wherein those polymers are mixed during polymerization and the content of ethylene /1-butene copolymer is 10 to 25% by weight, and wherein the composition further comprises a nucleating agent and talc.

### Citation List

### Patent Literatures

PTL 1: Japanese Patent Application Publication No. JP 2011-140640
PTL 2: Japanese Patent Application Publication No. JP 2016-89176

### Summary of Invention

### Technical Problem

Compositions for use in housings of home electric appliances are required to have particularly high flowability and high gloss, and excellent balance between stiffness and low temperature impact resistance. However, the composition disclosed in PTL 1 has not yet achieved sufficient levels of flowability and gloss. The composition disclosed in PTL 2 has high gloss, but there existed constraints on the production of such compositions since 1-butene is used. In view of these circumstances, the present invention has as its object to provide a polypropylene composition that is capable of giving an injection-molded article having high gloss and excellent balance between stiffness and low temperature impact resistance by maintaining flowability.

### Solution to Problem

The present inventors found that the aforementioned object can be achieved by optimizing the relative amounts of ethylene-derived units present in components (1) and (2) and ratio of the two components, in addition the intrinsic viscosity of xylene solubles (XSIV), and the Mw/Mn value of xylene insolubles (XI) as measured by GPC. More specifically, the aforementioned object is achieved by the invention defined below.

[1] A polypropylene composition comprising:

as component (1), a propylene (co)polymer containing 0 to 0.5% by weight of an ethylene-derived unit; and
as component (2), an ethylene/propylene copolymer containing 65 to 85% by weight of an ethylene-derived unit;
wherein the polypropylene composition satisfies the following requirements:

1) the Mw/Mn value of xylene insolubles (XI) of the composition as measured by GPC is in the range of 6 to 20,
2) the weight ratio of component (1) to component (2) is in the range of 70:30 to 85:15,
3) the intrinsic viscosity of xylene solubles (XSIV) of the composition is in the range of 1.0 to 3.0 dl/g,

4) the MFR (at 230°C under a load of 2.16 kg) of the composition is in the range of 3 to 15 g/10 min.

[2] The polypropylene composition as set forth in [1], wherein components (1) and (2) are polymers obtained by polymerizing propylene and ethylene using a catalyst comprising: (a) a solid catalyst comprising, as essential components, magnesium, titanium, a halogen, and an electron donor compound selected from succinate-based compounds, and (b) an organoaluminum compound, and optionally (c) an external electron donor compound.
[3] The polypropylene composition as set forth in [1] or [2], further comprising 0.01 to 1.0 parts by weight of a crystal nucleating agent based on a total of 100 parts by weight of component (1) and component (2);
[4] The polypropylene composition as set forth in any of [1] to [3], wherein the crystal nucleating agent is selected from phosphoric ester-based nucleating agents, triaminobenzene derivative-based nucleating agents, and combinations thereof.
[5] The polypropylene composition as set forth in any of [1] to [4], further comprising not more than 2 parts by weight of a plate-like inorganic filler based on a total of 100 parts by weight of component (1) and component (2).
[6] An injection-molded article of the polypropylene composition as set forth in any of [1] to [5].

Advantageous Effect of Invention

The present invention can provide a polypropylene composition that is capable of giving an injection-molded article having high gloss and excellent balance between stiffness and low temperature impact resistance by maintaining flowability.

Description of Embodiments

Hereunder, the present invention will be described in detail. It should be noted that numerical ranges defined as "X to Y" include both endpoints X and Y.

1. Polypropylene composition

The polypropylene composition of the present invention comprises components (1) and (2) as defined below:

component (1): a propylene (co)polymer containing 0 to 0.5% by weight of an ethylene-derived unit,
component (2): an ethylene/propylene copolymer containing 65 to 85% by weight of an ethylene-derived unit.

(1) Component (1)

Component (1) is a propylene (co)polymer containing 0 to 0.5% by weight of an ethylene-derived unit. A propylene (co)polymer containing 0% by weight of an ethylene-derived unit refers to homo-polypropylene. A propylene/ethylene copolymer containing 0.5% by weight of an ethylene-derived unit refers to a copolymer composed of an ethylene-derived unit and a propylene-derived unit at a weight ratio of 0.5:99.5. Other copolymers are also understood in the same way. The upper limit of the ethylene-derived unit content in component (1) is preferably not more than 0.4% by weight. When this content exceeds the upper limit, a decrease in stiffness occurs. When component (1) contains an ethylene-derived unit, the lower limit of the content of the ethylene-derived unit in component (1) only has to be more than 0% by weight, but is preferably not less than 0.1% by weight. When component (1) contains an ethylene-derived unit, it is preferable that this component be a random copolymer.

(2) Component (2)

Component (2) is an ethylene/propylene copolymer containing 65 to 85% by weight of an ethylene-derived unit. The upper limit of the ethylene-derived unit content in component (2) is not more than 85% by weight, preferably not more than80% by weight. When this content exceeds the upper limit, a decrease in low temperature impact resistance occurs. The lower limit of the ethylene-derived unit content in component (2) is not less than 65% by weight, preferably not less than 70% by weight. When this content falls below the lower limit, a decrease in gloss occurs.

(3) Composition ratio of component (1) to component (2)

The composition ratio (weight ratio) of component (1) to component (2) is in the range of 70:30 to 85:15, preferably in the range of 75:25 to 83:17. When the content of component (1) exceeds the upper limit, a decrease in low temperature impact resistance occurs. When the content of component (1) falls below the lower limit, a decrease in

stiffness occurs.

(4) Crystal nucleating agent

The polypropylene composition of the present invention preferably contains a crystal nucleating agent. As referred to in this invention, the crystal nucleating agent refers to an additive used to particularly improve stiffness by controlling the amount and orientation of a crystalline component in a resin. Since the crystal nucleating agent promotes the solidification of a molten resin during cooling, this agent can be used not only to impart stiffness but also to reduce cycle time in injection molding. The crystal nucleating agent to be used is not particularly limited, and any crystal nucleating agent commonly used in the art can be used, but the crystal nucleating agent is preferably selected from organic nucleating agents such as phosphoric ester-based nucleating agents, nonitol-based nucleating agents, sorbitol-based nucleating agents, triaminobenzene derivative-based nucleating agents, metal carboxylate-based nucleating agents, xylitol-based nucleating agents, and rosin-based nucleating agents. In this invention, the crystal nucleating agent is more preferably selected from phosphoric ester-based nucleating agents and triaminobenzene derivative-based nucleating agents, from the viewpoint that high stiffness can be achieved and little volatile components causing odor are produced. Exemplary phosphoric ester-based nucleating agents include aromatic phosphoric ester-based nucleating agents such as phosphoric acid-2,2'-methylenebis(4,6-di-t-butylphenyl)sodium salt, phosphoric acid-2,2'-methylenebis(4,6-di-tert-butylphenyl)aluminum salt, and phosphoric acid-2,2'-methylenebis(4,6-di-tert-butylphenyl)lithium salt. Exemplary nonitol-based nucleating agents include 1,2,3-trideoxy-4,6:5,7-bis-[(4-propylphenyl)methylene]-nonitol. Exemplary sorbitol-based nucleating agents include 1,3:2,4-bis-o-(3,4-dimethylbenzylidene)-D-sorbitol. Exemplary triaminobenzene derivative-based nucleating agents include 1,3,5-tris(2,2-dimethylpropanamide)benzene. Exemplary metal carboxylate-based nucleating agents include sodium adipate, potassium adipate, aluminum adipate, sodium sebacate, potassium sebacate, aluminum sebacate, sodium benzoate, aluminum benzoate, aluminum di-para-t-butylbenzoate, titanium di-para-t-butylbenzoate, chromium di-para-t-butylbenzoate, and aluminum hydroxy-di-t-butylbenzoate. Exemplary xylitol-based nucleating agents include bis-1,3:2,4-(5',6',7',8'-tetrahydro-2-naphthaldehydebenzylidene)-1-allyl-xylitol, and bis-1,3:2,4-(3',4'-dimethylbenzylidene)-1-propyl-xylitol. Exemplary rosin-based nucleating agents include rosinic acid metal salt compounds or rosinic acid partial metal salt compounds, which are obtained by reaction of a rosinic acid such as pimaric acid, sandaracopimaric acid, palustric acid, isopimaric acid, abietic acid, dehydroabietic acid, neoabietic acid, dihydropimaric acid, dihydroabietic acid or tetrahydroabietic acid, with a metal such as calcium or magnesium, and specific examples thereof include partial calcium salt of rosinic acid. One of the above-listed crystal nucleating agents may be used alone, or two or more of them may be used in combination.

In the present invention, the crystal nucleating agent can be added through the use of a masterbatch composed of a crystal nucleating agent and an olefinic polymer. Where the matrix polymer in the masterbatch comprises component (1) or component (2), the amount of the masterbatch, and the concentration of the crystal nucleating agent in the masterbatch are adjusted so as to ensure that the weight ratio of component (1) to component (2) in the polypropylene composition of this invention falls within the range described below. Where the matrix polymer does not comprise component (1) or component (2), the polypropylene composition of this invention is to contain the matrix polymer as any other component described below.

The content of the crystal nucleating agent is preferably in the range of 0.01 to 1.0 parts by weight, more preferably in the range of 0.01 to 0.5 parts by weight, even more preferably in the range of 0.015 to 0.45 parts by weight, based on a total of 100 parts by weight of components (1) and (2) (hereinafter also referred to as "resin components"). When no crystal nucleating agent is incorporated, a decrease in stiffness occurs in some cases. In contrast, even when the crystal nucleating agent is incorporated in an amount exceeding the upper limit mentioned above, the crystal nucleation promoting effect reaches a plateau, merely resulting in an increase in production cost; so, it is not realistic to do so from the viewpoint of industrial production at large quantities and at low cost.

(5) Plate-like inorganic filler

The polypropylene composition of the present invention may also contain not more than 2 parts by weight, preferably not more than 1.5 parts by weight, more preferably not more than 1.2 parts by weight, of a plate-like inorganic filler, based on a total of 100 parts by weight of the resin components. The plate-like inorganic filler is capable of enhancing the stiffness of a composition. However, when this filler is present in an amount exceeding the upper limit mentioned above, a poor appearance may occur. When the resin components contain the plate-like inorganic filler, the lower limit of its content is not specified but is preferably not less than 0.1 parts by weight.

The plate-like inorganic filler can be exemplified by: carbonates such as mica, clay, talc, kaolinite, glass flake, calcium carbonate and magnesium carbonate; hydroxides such as aluminum hydroxide and magnesium hydroxide; oxides such as zinc oxide and magnesium oxide; synthetic silicic acids or silicates such as hydrated calcium silicate, hydrated aluminum silicate, silicic acid hydrate and silicic acid anhydrate; and natural silicic acids or silicates such as

selenite, with talc being preferred from viewpoints such as availability. One of the above-listed plate-like inorganic fillers may be used alone, or two or more of them may be used in combination. The plate-like inorganic filler has an average particle diameter of preferably 1 to 10 μm, more preferably 2 to 7 μm. The average particle diameter is measured according to JIS Z 8825.

(6) Characteristics

1) XSIV

The intrinsic viscosity of xylene solubles (XSIV) of the polypropylene composition of the present invention serves as an index for the molecular weight of non-crystalline components in the composition. XSIV is determined by obtaining components soluble in xylene at 25°C and measuring the intrinsic viscosity of the components by a conventional procedure. In this invention, XSIV is in the range of 1.0 to 3.0 dl/g. When XSIV exceeds the upper limit, a decrease in gloss occurs. When XSIV falls below the lower limit, it becomes difficult to produce the polypropylene composition. From this viewpoint, the intrinsic viscosity is preferably in the range of 1.0 to 2.0 dl/g.

2) MFR

The MFR (melt mass-flow rate) of the polypropylene composition of the present invention is in the range of 3 to 15 g/10 min., as measured at a temperature of 230°C under a load of 2.16 kg. When MFR exceeds the upper limit, a decrease in low temperature impact resistance occurs. When MFR falls below the lower limit, injection molding becomes difficult for the polypropylene composition. From this viewpoint, it is preferred that the lower limit of MFR be not less than 4 g/10 min, more preferably not less than 7 g/10 min.

3) Mw/Mn of XI

The Mw/Mn value of xylene insolubles (XI) of the polypropylene composition of the present invention, as measured by GPC, is in the range of 6 to 20. The xylene insolubles are crystalline components of this composition. In the composition of this invention, the Mw/Mn of XI, which serves as an index for molecular weight distribution, is in the range of 6 to 20, which is wide. Therefore, the effects attributable to both high- and low-molecular-weight components can be obtained. To be specific, the former components provide an improvement in die swell and allow a molten polymer to smoothly contact with a mold surface during molding, so that the composition becomes satisfactory in gloss, while the latter components allow the composition of this invention to achieve excellent flowability within the range of MFR of this composition. In other words, when the molecular weight distribution is within the aforementioned range, in addition to high flowability and excellent balance between stiffness and low temperature impact resistance, high gloss can be achieved. From this viewpoint, the lower limit of Mw/Mn of XI is preferably not less than 7, more preferably not less than 8, even more preferably not less than 9. The upper limit is preferably 15 or less, more preferably 12 or less. When Mw/Mn of XI exceeds the upper limit, it becomes difficult to produce the polypropylene composition. Mw/Mn of XI can be determined by obtaining components insoluble in xylene at 25°C and subjecting them to measurement by GPC (gel permeation chromatography).

4) Structure

The polypropylene composition of the present invention is preferred to have a phase structure in which component (2) is dispersed in component (1).

(7) Other components

The polypropylene composition of the present invention may have added thereto any conventional additives commonly used in the art, such as antioxidant, chlorine absorber, heat-resistant stabilizer, light stabilizer, ultraviolet absorber, internal lubricant, external lubricant, antiblocking agent, antistatic agent, antifogging agent, flame retardant, dispersant, copper inhibitor, neutralizer, plasticizer, foam inhibitor, crosslinking agent, peroxide, extender oil, and other organic pigments and other inorganic pigments besides the plate-like inorganic filler mentioned above. Such additives can be added in known amounts. Also, the polypropylene composition of this invention may contain one or more types of resin or rubber other than the resin components mentioned above to the extent that the effects of this invention are not impaired. Further, as described above, in this invention, a crystal nucleating agent can be added through the use of a masterbatch composed of a crystal nucleating agent and an olefinic polymer. Where the matrix polymer in the masterbatch is different from components (1) and (2), the polypropylene composition of this invention may contain said matrix

polymer.

2. Production method

The aforementioned resin components are preferably obtained by a method comprising the step of polymerizing the starting monomers using a catalyst comprising (a) a solid catalyst comprising magnesium, titanium, a halogen, and a succinate-based compound serving as an internal electron donor compound, (b) an organoaluminum compound, and optionally (c) an external electron donor compound.

(1) Solid catalyst (component (a))

Component (a) can be prepared by a known method, for example, by contacting a magnesium compound, a titanium compound, and an electron donor compound with each other.

The titanium compound used to prepare component (a) is preferably a tetravalent titanium compound represented by the general formula: $Ti(OR)_gX_{4-g}$. In this formula, R is a hydrocarbon group, X is a halogen, and $0 \leq g \leq 4$. The titanium compound is more specifically exemplified by titanium tetrahalides such as $TiCl_4$, TiBr4, and $TiI_4$; alkoxytitanium trihalides such as $Ti(OCH_3)Cl_3$, $Ti(OC_2H_5)Cl_3$, $Ti(O_n\text{-}C_4H_9)Cl_3$, $Ti(OC_2H_5)Br_3$, and $Ti(OisoC_4H_9)Br_3$; alkoxytitanium dihalides such as $Ti(OCH_3)_2Cl_2$, $Ti(OC_2H_5)_2Cl_2$, $Ti(O_n\text{-}C_4H_9)_2Cl_2$, and $Ti(OC_2H_5)_2Br_2$; trialkoxytitanium monohalides such as $Ti(OCH_3)_3Cl$, $Ti(OC_2H_5)_3Cl$, $Ti(O_n\text{-}C_4H_9)_3Cl$, and $Ti(OC_2H_5)_3Br$; and tetraalkoxytitaniums such as $Ti(OCH_3)_4$, $Ti(OC_2H_5)_4$, and $Ti(O_n\text{-}C_4H_9)_4$. Among them, halogen-containing titanium compounds are preferred, titanium tetrahalogenides are particularly preferred, and titanium tetrachlorides are more particularly preferred.

Examples of the magnesium compound used to prepare component (a) include magnesium compounds having a magnesium-carbon bond or a magnesium-hydrogen bond, such as dimethylmagnesium, diethylmagnesium, dipropylmagnesium, dibutylmagnesium, diamylmagnesium, dihexylmagnesium, didecylmagnesium, ethylmagnesium chloride, propylmagnesium chloride, butylmagnesium chloride, hexylmagnesium chloride, amylmagnesium chloride, butylethoxymagnesium, ethylbutylmagnesium, and butylmagnesium hydride. Such magnesium compounds can be used in the form of, for example, a complex compound with an organoaluminum or the like, and can be in liquid or solid form. More preferred examples of the magnesium compound include magnesium halides such as magnesium chloride, magnesium bromide, magnesium iodide, and magnesium fluoride; alkoxymagnesium halides such as methoxymagnesium chloride, ethoxymagnesium chloride, isopropoxymagnesium chloride, butoxymagnesium chloride, and octoxymagnesium chloride; aryloxymagnesium halides such as phenoxymagnesium chloride and methylphenoxymagnesium chloride; alkoxymagnesiums such as ethoxymagnesium, isopropoxymagnesium, butoxymagnesium, n-octoxymagnesium, and 2-ethylhexoxymagnesium; aryloxymagnesiums such as phenoxymagnesium and dimethylphenoxymagnesium; and magnesium carboxylates such as magnesium laurate and magnesium stearate.

The electron donor compound used to prepare component (a) is generally referred to as an "internal electron donor compound." In the present invention, a succinate-based compound that provides a wide molecular weight distribution is preferably used as an internal electron donor compound. While it is generally known that polymer blending or multi-stage polymerization can achieve an increase in molecular weight distribution, the compositions obtained by polymerization using the aforementioned catalyst exhibit a higher degree of gloss, relative to compositions with the same molecular weight distribution obtained by powder- or pellet-blending polymers polymerized using other catalysts, or compositions with the same molecular weight distribution obtained by multi-stage polymerization. The reason for this is considered to be as follows: the former compositions produced using this catalyst have a structure in which high-molecular-weight and low-molecular-weight components are integrated at a near-molecular level, and exhibit a high level of die swell, so that molded articles thereof can closely contact with a mold surface, whereas in the latter compositions, those components are not mixed at a near-molecular level, so that those compositions merely show apparently the same molecular weight distribution and do not exhibit a sufficient level of die swell thereby being unable to achieve a high degree of gloss. The composition comprising polypropylene and ethylene/1-butene copolymer described in PTLs 1 and 2 has high gloss due to low XSIV and high amount of ethylene unit in the copolymer. Thus, it was predicted that if the compound is produced in use of a catalyst comprising succinate-based compound, higher gloss would be achieved. However, the inventors found that it is difficult to produce the compound by the existing process. Accordingly, the inventors achieved a composition having high gloss in addition to high flowability and excellent balance between stiffness and low temperature impact resistance, by producing a compound comprising components (1) and (2) in use of the catalyst comprising succinate-based compound. The high gloss is caused by a synergistic effect due to a structure of the copolymer and a feature of polypropylene produced with a catalyst comprising succinate-based compound. The following will describe succinate-based compounds.

As referred to herein, the "succinate-based compounds" refers to diesters of succinic acid or diesters of substituted succinic acid. Preferred succinate-based compounds are represented by formula (I) shown below:

[Chem. 1]

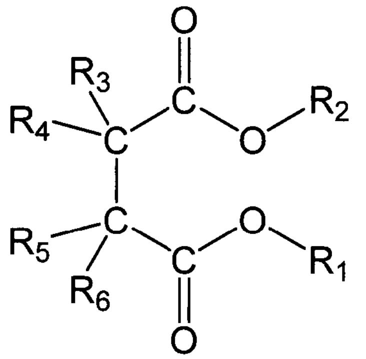

(I)

In this formula, the groups $R_1$ and $R_2$ are the same as or different from each other, and are each a $C_1$ to $C_{20}$ linear or branched alkyl, alkenyl, cycloalkyl, aryl, arylalkyl, or alkylaryl group optionally containing a heteroatom; and the groups $R_3$ to $R_6$ are the same as or different from each other, and are each a hydrogen or a $C_1$ to $C_{20}$ linear or branched alkyl, alkenyl, cycloalkyl, aryl, arylalkyl, or alkylaryl group optionally containing a heteroatom, and the groups $R_3$ to $R_6$ attached to the same carbon atom or to different carbon atoms may be taken together to form a ring.

$R_1$ and $R_2$ are preferably $C_1$ to $C_8$ alkyl, cycloalkyl, aryl, arylalkyl, or alkylaryl groups. Particularly preferred are those compounds wherein $R_1$ and $R_2$ are selected from primary alkyls, in particular, branched primary alkyls. Preferred examples of the groups $R_1$ and $R_2$ include $C_1$ to $C_8$ alkyl groups, such as methyl, ethyl, n-propyl, n-butyl, isobutyl, neopentyl, and 2-ethylhexyl. Ethyl, isobutyl, and neopentyl are particularly preferred.

One preferred group of the compounds represented by formula (I) are those compounds wherein $R_3$ to $R_5$ are each hydrogen, and $R_6$ is a branched alkyl, cycloalkyl, aryl, arylalkyl, or alkylaryl group having 3 to 10 carbon atoms. Preferred specific examples of such monosubstituted succinate compounds include diethyl-sec-butyl succinate, diethyl thexylsuccinate, diethyl cyclopropylsuccinate, diethyl norbornylsuccinate, diethyl perihydrosuccinate, diethyl trimethylsilylsuccinate, diethyl methoxysuccinate, diethyl-p-methoxyphenylsuccinate, diethyl-p-chlorophenylsuccinate, diethyl phenylsuccinate, diethyl cyclohexylsuccinate, diethyl benzylsuccinate, diethyl cyclohexylmethylsuccinate, diethyl-t-butylsuccinate, diethyl isobutylsuccinate, diethyl isopropylsuccinate, diethyl neopentylsuccinate, diethyl isopentylsuccinate, diethyl (1-trifluoromethylethyl)succinate, diethyl fluorenylsuccinate, 1-ethoxycarbo diisobutyl phenylsuccinate, diisobutyl-sec-butylsuccinate, diisobutyl thexylsuccinate, diisobutyl cyclopropylsuccinate, diisobutyl norbornylsuccinate, diisobutyl perihydrosuccinate, diisobutyl trimethylsilylsuccinate, diisobutyl methoxysuccinate, diisobutyl-p-methoxyphenylsuccinate, diisobutyl-p-chlorophenylsuccinate, diisobutyl cyclohexylsuccinate, diisobutyl benzylsuccinate, diisobutyl cyclohexylmethylsuccinate, diisobutyl-t-butylsuccinate, diisobutyl isobutylsuccinate, diisobutyl isopropylsuccinate, diisobutyl neopentylsuccinate, diisobutyl isopentylsuccinate, diisobutyl (1-trifluoromethylethyl)succinate, diisobutyl fluorenylsuccinate, dineopentyl-sec-butyl-succinate, dineopentyl thexylsuccinate, dineopentyl cyclopropylsuccinate, dineopentyl norbornylsuccinate, dineopentyl perihydrosuccinate, dineopentyl trimethylsilylsuccinate, dineopentyl methoxysuccinate, dineopentyl-p-methoxyphenylsuccinate, dineopentyl-p-chlorophenylsuccinate, dineopentyl phenylsuccinate, dineopentyl cyclohexylsuccinate, dineopentyl benzylsuccinate, dineopentyl cyclohexylmethylsuccinate, dineopentyl-t-butylsuccinate, dineopentyl isobutylsuccinate, dineopentyl isopropylsuccinate, dineopentyl neopentylsuccinate, dineopentyl isopentylsuccinate, dineopentyl (1-trifluoromethylethyl)succinate, and dineopentyl fluorenylsuccinate.

Another preferred group of the compounds within the scope of formula (I) are those compounds wherein at least two of the groups $R_3$ to $R_6$ are different from hydrogen, and are selected from $C_1$ to $C_{20}$ linear or branched alkyl, alkenyl, cycloalkyl, aryl, arylalkyl, or alkylaryl groups optionally containing a heteroatom. Particularly preferred are those compounds wherein the two groups different from hydrogen are attached to the same carbon atom. More specifically, such compounds are those wherein $R_3$ and $R_4$ are groups different from hydrogen, and $R_5$ and $R_6$ are hydrogen atoms. Preferred specific examples of such disubstituted succinate compounds include diethyl-2,2-dimethylsuccinate, diethyl-2-ethyl-2-methylsuccinate, diethyl-2-benzyl-2-isopropylsuccinate, diethyl-2-cyclohexylmethyl-2-isobutylsuccinate, diethyl-2-cyclopentyl-2-n-butylsuccinate, diethyl-2,2-diisobutylsuccinate, diethyl-2-cyclohexyl-2-ethylsuccinate, diethyl-2-isopropyl-2-methylsuccinate, diethyl-2-tetradecyl-2-ethylsuccinate, diethyl-2-isobutyl-2-ethylsuccinate, diethyl-2-(1-trifluoromethylethyl)-2-methylsuccinate, diethyl-2-isopentyl-2-isobutylsuccinate, diethyl-2-phenyl-2-n-butylsuccinate, diisobutyl-2,2-dimethylsuccinate, diisobutyl-2-ethyl-2-methylsuccinate, diisobutyl-2-benzyl-2-isopropylsuccinate, diisobutyl-2-cyclohexylmethyl-2-isobutylsuccinate, diisobutyl-2-cyclopentyl-2-n-butylsuccinate, diisobutyl-2,2-diisobutylsuccinate, diisobutyl-2-cyclohexyl-2-ethylsuccinate, diisobutyl-2-isopropyl-2-methylsuccinate, diisobutyl-2-tetradecyl-2-ethylsuccinate, diisobutyl-2-isobutyl-2-ethylsuccinate, diisobutyl-2-(1 -trifluoromethylethyl)-2-methylsuccinate, diisobutyl-2-isopentyl-2-isobutylsuccinate, diisobutyl-2-phenyl-2-n-butylsuccinate, dineopentyl-2,2-dimethylsuccinate, dineopentyl-2-ethyl-2-methylsuccinate, dineopentyl-2-benzyl-2-isopropylsuccinate, dineopentyl-2-cyclohexylmethyl-2-isobutylsuccinate, dineopentyl-2-cyclopentyl-2-n-butylsuccinate, dineopentyl-2,2-diisobutylsuccinate, dineopentyl-2-cyclohexyl-2-ethylsuccinate, dineopentyl-2-isopropyl-2-methylsuccinate, dineopentyl-2-tetradecyl-2-ethylsuccinate, dineopentyl-2-isobutyl-2-ethylsuccinate, dineopentyl-2-(1-trifluoromethylethyl)-2-methylsuccinate, dineopentyl-2-isopentyl-2-isobutylsuccinate, and dineopentyl-2-phenyl-2-n-butylsuccinate.

Also, particularly preferred are those compounds wherein at least two groups different from hydrogen are attached to different carbon atoms. More specifically, such compounds are those wherein $R_3$ and $R_5$ are groups different from hydrogen. In this case, $R_4$ and $R_6$ may be hydrogen atoms or groups different from hydrogen, but it is preferred that one of them be a hydrogen atom (trisubstituted succinates). Preferred specific examples of such compounds include diethyl-2,3-bis(trimethylsilyl)succinate, diethyl-2,2-sec-butyl-3-methylsuccinate, diethyl-2-(3,3,3-trifluoropropyl)-3-methylsuccinate, diethyl-2,3-bis(2-ethylbutyl)succinate, diethyl-2,3-diethyl-2-isopropylsuccinate, diethyl-2,3-diisopropyl-2-methylsuccinate, diethyl-2,3-dicyclohexyl-2-methyldiethyl-2,3-dibenzylsuccinate, diethyl-2,3-diisopropylsuccinate, diethyl-2,3-bis(cyclohexylmethyl)succinate, diethyl-2,3-di-t-butylsuccinate, diethyl-2,3-diisobutylsuccinate, diethyl-2,3-dineopentylsuccinate, diethyl-2,3-diisopentylsuccinate, diethyl-2,3-(1-trifluoromethylethyl)succinate, diethyl-2,3-tetradecylsuccinate, diethyl-2,3-fluorenylsuccinate, diethyl-2-isopropyl-3-isobutylsuccinate, diethyl-2-tert-butyl-3-isopropylsuccinate, diethyl-2-isopropyl-3-cyclohexylsuccinate, diethyl-2-isopentyl-3-cyclohexylsuccinate, diethyl-2-tetradecyl-3-cyclohexylmethylsuccinate, diethyl-2-cyclohexyl-3-cyclopentylsuccinate, diisobutyl-2,3-diethyl-2-isopropylsuccinate, diisobutyl-2,3-diisopropyl-2-methylsuccinate, diisobutyl-2,3-dicyclohexyl-2-methylsuccinate, diisobutyl-2,3-dibenzylsuccinate, diisobutyl-2,3-diisopropylsuccinate, diisobutyl-2,3-bis(cyclohexylmethyl)succinate, diisobutyl-2,3-di-t-butylsuccinate, diisobutyl-2,3-diisobutylsuccinate, diisobutyl-2,3-dineopentylsuccinate, diisobutyl-2,3-diisopentylsuccinate, diisobutyl-2,3-(1-trifluoromethylethyl)succinate, diisobutyl-2,3-tetradecylsuccinate, diisobutyl-2,3-fluorenylsuccinate, diisobutyl-2-isopropyl-3-isobutylsuccinate, diisobutyl-2-tert-butyl-3-isopropylsuccinate, diisobutyl-2-isopropyl-3-cyclohexylsuccinate, diisobutyl-2-isopentyl-3-cyclohexylsuccinate, diisobutyl-2-tetradecyl-3-cyclohexylmethylsuccinate, diisobutyl-2-cyclohexyl-3-cyclopentylsuccinate, dineopentyl-2,3-bis(trimethylsilyl)succinate, dineopentyl-2,2-sec-butyl-3-methylsuccinate, dineopentyl-2-(3,3,3-trifluoropropyl)-3-methylsuccinate, dineopentyl-2,3-bis(2-ethylbutyl)succinate, dineopentyl-2,3-diethyl-2-isopropylsuccinate, dineopentyl-2,3-diisopropyl-2-methylsuccinate, dineopentyl-2,3-dicyclohexyl-2-methylsuccinate, dineopentyl-2,3-dibenzylsuccinate, dineopentyl-2,3-diisopropylsuccinate, dineopentyl-2,3-bis(cyclohexylmethyl)succinate, dineopentyl-2,3-di-t-butylsuccinate, dineopentyl-2,3-diisobutylsuccinate, dineopentyl-2,3-dineopentylsuccinate, dineopentyl-2,3-diisopentylsuccinate, dineopentyl-2,3-(1-trifluoromethylethyl)succinate, dineopentyl-2,3-tetradecylsuccinate, dineopentyl-2,3-fluorenylsuccinate, dineopentyl-2-isopropyl-3-isobutylsuccinate, dineopentyl-2-tert-butyl-3-isopropylsuccinate, dineopentyl-2-isopropyl-3-cyclohexylsuccinate, dineopentyl-2-isopentyl-3-cyclohexylsuccinate, dineopentyl-2-tetradecyl-3-cyclohexylmethylsuccinate, and dineopentyl-2-cyclohexyl-3-cyclopentylsuccinate.

Also, those compounds of formula (I) wherein some of the group $R_3$ to $R_6$ are joined together to form a ring can be preferably used. Examples of such compounds include those mentioned in International Patent Application Domestic Publication No. JP 2002-542347, such as 1-(ethoxycarbonyl)-1-(ethoxyacetyl)-2,6-dimethylcyclohexane, 1-(ethoxycarbonyl)-1-(ethoxyacetyl)-2,5-dimethylcyclopentane, 1-(ethoxycarbonyl)-1-(ethoxyacetylmethyl)-2-methylcyclohexane, and 1-(ethoxycarbonyl)-1 -(ethoxy(cyclohexyl)acetyl)cyclohexane. Further, cyclic succinate compounds as disclosed in International Patent Publication No. WO 2009/069483, such as diisobutyl 3,6-dimethylcyclohexane-1,2-dicarboxylate and diisobutyl cyclohexane-1,2-dicarboxylate, can be preferably used. Other preferred examples of cyclic succinate compounds include those disclosed in International Patent Publication No. WO 2009/057747.

In the case of those compounds of formula (I) wherein the groups $R_3$ to $R_6$ contain a heteroatom, the heteroatom is preferably a Group 15 atom including nitrogen and phosphorus or a Group 16 atom including oxygen and sulfur. Examples of those compounds wherein the groups $R_3$ to $R_6$ contain a Group 15 atom include the compounds disclosed in Japanese Patent Application Publication No. JP 2005-306910. Examples of those compounds wherein the groups $R_3$ to $R_6$ contain a Group 16 atom include the compounds disclosed in Japanese Patent Application Publication No. JP 2004-131537.

Other internal electron donor compounds that provide a comparable molecular weight distribution to that provided by the succinate-based compounds may also be used. Examples of such other compounds include diphenyl dicarboxylic acid esters as described in Japanese Patent Application Publication No. JP 2013-28704, cyclohexene dicarboxylic acid esters as disclosed in Japanese Patent Application Publication No. JP 2014-201602, dicycloalkyl dicarboxylic acid esters as disclosed in Japanese Patent Application Publication No. JP 2013-28705, diol dibenzoates as disclosed in Japanese Patent No. 4959920, and 1,2-phenylene dibenzoates as disclosed in International Patent Publication No. WO 2010/078494.

(2) Organoaluminum compound (component (b))

Examples of the organoaluminum compound as component (b) include:

trialkylaluminums such as triethylaluminum and tributylaluminum;
trialkenylaluminums such as triisoprenylaluminum;
dialkylaluminum alkoxides such as diethylaluminum ethoxide and dibutylaluminum butoxide;
alkylaluminum sesquialkoxides such as ethylaluminum sesquiethoxide and butylaluminum sesquibutoxide;
partially halogenated alkylaluminums, for example, alkylaluminum dihalogenides such as ethylaluminum dichloride, propylaluminum dichloride, and butylaluminum dibromide;
dialkylaluminum hydrides such as diethylaluminum hydride and dibutylaluminum hydride;
partially hydrogenated alkylaluminums, for example, alkylaluminum dihydrides such as ethylaluminum dihydride and propylaluminum dihydride; and
partially alkoxylated and halogenated alkylaluminums such as ethylaluminum ethoxychloride, butylaluminum butoxychloride, and ethylaluminum ethoxybromide.

(3) Electron donor compound (component (c))

The electron donor compound as component (c) is generally referred to as an "external electron donor compound." In one embodiment, the catalyst may comprise component (c), but in another embodiment, the catalyst may not comprise component (c). Such an electron donor compound is preferably an organosilicon compound. Preferred examples of the organosilicon compound include:
trimethylmethoxysilane, trimethylethoxysilane, dimethyldimethoxysilane, dimethyldiethoxysilane, diisopropyldimethoxysilane, t-butylmethyldimethoxysilane, t-butylmethyldiethoxysilane, t-amylmethyldiethoxysilane, diphenyldimethoxysilane, phenylmethyldimethoxysilane, diphenyldiethoxysilane, bis-o-tolyldimethoxysilane, bis-m-tolyldimethoxysilane, bis-p-tolyldimethoxysilane, bis-p-tolyldiethoxysilane, bis-ethylphenyldimethoxysilane, dicyclopentyldimethoxysilane, dicyclohexyldimethoxysilane, cyclohexylmethyldimethoxysilane, cyclohexylmethyldiethoxysilane, ethyltrimethoxysilane, ethyltriethoxysilane, vinyltrimethoxysilane, methyltrimethoxysilane, n-propyltriethoxysilane, decyltrimethoxysilane, decyltriethoxysilane, phenyltrimethoxysilane, γ-chloropropyltrimethoxysilane, methyltriethoxysilane, ethyltriethoxysilane, vinyltriethoxysilane, t-butyltriethoxysilane, thexyltrimethoxysilane, n-butyltriethoxysilane, iso-butyltriethoxysilane, phenyltriethoxysilane, γ-aminopropyltriethoxysilane, chlorotriethoxysilane, ethyltriisopropoxysilane, vinyltributoxysilane, cyclohexyltrimethoxysilane, cyclohexyltriethoxysilane, 2-norbornanetrimethoxysilane, 2-norbornanetriethoxysilane, 2-norbornanemethyldimethoxysilane, ethyl silicate, butyl silicate, trimethylphenoxysilane, methyltriallyloxysilane, vinyltris(β-methoxyethoxysilane), vinyltriacetoxysilane, dimethyltetraethoxydisiloxane, methyl(3,3,3-trifluoro-n-propyl)dimethoxysilane, cyclohexylethyldimethoxysilane, cyclopentyl-t-butoxydimethoxysilane, diisobutyldimethoxysilane, isobutylisopropyldimethoxysilane, n-propyltrimethoxysilane, di-n-propyldimethoxysilane, texyltrimethoxysilane, t-butylethyldimethoxysilane, t-butylpropyldimethoxysilane, t-butyl-t-butoxydimethoxysilane, isobutyltrimethoxysilane, cyclohexylisobutyldimethoxysilane, di-sec-butyldimethoxysilane, isobutylmethyldimethoxysilane, bis(decahydroisoquinolin-2-yl)dimethoxysilane, diethylaminotriethoxysilane, dicyclopentyl-bis(ethylamino)silane, tetraethoxysilane, tetramethoxysilane, and isobutyltriethoxysilane.

Particularly preferred are ethyltriethoxysilane, n-propyltriethoxysilane, n-propyltrimethoxysilane, t-butyltriethoxysilane, t-butylmethyldimethoxysilane, t-butylmethyldiethoxysilane, t-butylethyldimethoxysilane, t-butylpropyldimethoxysilane, t-butyl-t-butoxydimethoxysilane, t-butyltrimethoxysilane, i-butyltrimethoxysilane, isobutylmethyldimethoxysilane, i-butyl-sec-butyldimethoxysilane, ethyl(perhydroisoquinolin-2-yl)dimethoxysilane, bis(decahydroisoquinolin-2-yl)dimethoxysilane, tri(isopropenyloxy)phenylsilane, thexyltrimethoxysilane, vinyltriethoxysilane, phenyltriethoxysilane, phenyltrimethoxysilane, vinyltributoxysilane, diphenyldimethoxysilane, diisopropyldimethoxysilane, diisobutyldimethoxysilane, i-butyl-i-propyldimethoxysilane, cyclopentyl-t-butoxydimethoxysilane, dicyclopentyldimethoxysilane, cyclohexylmethyldimethoxysilane, cyclohexyl-i-butyldimethoxysilane, cyclopentyl-i-butyldimethoxysilane, cyclopentylisopropyldimethoxysilane, di-sec-butyldimethoxysilane, diethylaminotriethoxysilane, tetraethoxysilane, tetramethoxysilane, isobutyltriethoxysilane, phenylmethyldimethoxysilane, phenyltriethoxysilane, bis-p-tolyldimethoxysilane, p-tolylmethyldimethoxysilane, dicyclohexyldimethoxysilane, cyclohexylethyldimethoxysilane, 2-norbornanetriethoxysilane, 2-norbornanemethyldimethoxysilane, diphenyldiethoxysilane, methyl(3,3,3-trifluoropropyl)dimethoxysilane, ethyl silicate, and the like.

(4) Polymerization

The starting monomers are polymerized by contacting them with the catalyst prepared as described above. In this process, it is preferred that pre-polymerization be firstly performed using the above-described catalyst. Pre-polymerization is a step at which a polymer chain serving as a foothold for subsequent main polymerization of the starting monomers is formed on a solid catalyst component. Pre-polymerization can be performed by a known method. Pre-polymerization is generally performed at not more than 40°C, preferably at not more than 30°C, more preferably at not more than 20°C. Then, the prepolymerized catalyst is introduced into a polymerization reaction system to perform main

polymerization of the starting monomers. Main polymerization is preferably performed by polymerizing the starting monomer of component (1) and the starting monomer of component (2) using two or more reactors. The polymerization can be performed in a liquid phase, a gas phase, or a liquid/gas phase. The polymerization temperature is preferably in the range of normal temperature to 150°C, more preferably in the range of 40°C to 100°C. The polymerization pressure is preferably in the range of 3.3 to 6.0 MPa for polymerization in a liquid phase, or preferably in the range of 0.5 to 3.0 MPa for polymerization in a gas phase. A conventional molecular weight regulator known in the art, such as chain transfer agent (e.g., hydrogen or ZnEt2), may be used.

Moreover, a polymerization apparatus having gradients in monomer concentration or polymerization conditions may be used. For example, the monomers can be polymerized in a gas phase using such an apparatus having at least two interconnected polymerization zones. More specifically, in the presence of a catalyst, monomers are fed to a polymerization zone consisting of a riser and are polymerized in said zone, while monomers are also fed to a downcomer connected to the riser and are polymerized in said zone, and then as the monomers are circulated between the riser and downcomer, a polymer product is collected. This method includes a means for totally or partially preventing a gas mixture present in the riser from entering the downcomer. Further, a gas or liquid mixture that is different in chemical constitution from the gas mixture present in the riser is introduced into the downcomer. The aforementioned polymerization method can be performed by following, for example, the method disclosed in International Patent Application Domestic Publication No. JP 2002-520426.

3. Application

Since the polypropylene composition of the present invention provides high gloss and excellent balance between stiffness and low temperature impact resistance, this is the most suitable for use as a resin composition for injection molding. Since the polypropylene composition of this invention is excellent in flowability, this composition can be injection-molded into a molded article having a thickness of 0.5 to 3 mm. The inventive polypropylene composition is preferred to have the physical properties described below.

1) Gloss: JIS Z8741

The gloss used in the present invention is a specular gloss value determined by measuring the surface of an injection-molded article at an incident angle of 60° according to JIS Z8741. The gloss value is preferably not less than 88%, more preferably not less than 90%. The upper limit of gloss is not limited, but is generally not more than about 99%. The higher the gloss value, the more excellent the luster and appearance.

2) Stiffness: JIS K7171

The polypropylene composition of the present invention has a flexural modulus of preferably not less than 1400 MPa, as determined by preparing a test piece according to JIS K6921-2 and measuring the test piece according to JIS K7171.

3) Low temperature impact resistance

The polypropylene composition of the present invention preferably has a puncture resistance (-10°C) of not less than 10 J.

Since the polypropylene composition of the present invention has the physical properties described above, this composition is useful for use such as housings of home electric appliances. The polypropylene composition of this invention can be directly injection-molded into a final product, or can also be made into a thin-wall article such as sheet by extruding or injection-molding and then into a final product by providing the thin-wall article to a secondary processing such as vacuum forming or pressure forming. However, the application of the polypropylene composition of this invention is not limited to the foregoing, and this composition is also useful for use as general miscellaneous goods, for example.

Examples

[Examples 1 and 3]

A Ziegler-Natta catalyst was produced according to Example 1 of International Patent Publication No. WO 2009/050045. However, at the time of the first temperature elevation, the temperature was elevated not to 100°C but to 110°C. The thus-produced catalyst component, triethylaluminium (TEAL), and the external electron donor compound, dicyclopentyldimethoxysilane (DCPMS), were brought into contact with each other at 12°C for 24 minutes. The weight

ratio of TEAL to the solid catalyst component was 20, and the weight ratio of TEAL to DCPMS was 10. The thus-obtained catalyst system, before introduced into a first polymerization reactor, was subjected to pre-polymerization by being suspended in liquid propylene and held at 20°C for about 5 minutes.

The resulting prepolymerized product was introduced into a first-stage polymerization reactor in a polymerization apparatus having two stages of polymerization reactors connected in series, and then propylene was fed to the reactor to thereby produce a propylene homopolymer as component (1) in liquid phase. In a second-stage gas-phase polymerization reactor, ethylene and propylene were fed to produce an ethylene/propylene copolymer as component (2). During the polymerization, the polymerization temperatures of the first- and second-stage reactors were set to 75°C and 80°C, respectively, and the pressures in the two reactors were also adjusted. Further, hydrogen was used as a molecular weight regulator, and the residence time distributions at the first and second stages were adjusted so as to give a specified ratio of component (1) to component (2). Table 1 shows the polymerization conditions for components (1) and (2), and the characteristic data of different compositions produced from these components.

To 100 parts by weight of the resulting resin components, 0.2 parts by weight of an antioxidant, *i.e.,* B225 produced by BASF, 0.05 parts by weight of a neutralizer, *i.e.,* calcium stearate produced by Tannan Kagaku Kogyo Co., Ltd., were added, and the contents were stirred and mixed for 1 minute using a Henschel mixer. The mixture was extruded at a cylinder temperature of 230°C using an NVC φ50 mm single-screw extruder produced by Nakatani Machinery Ltd., and the extruded strands were cooled in water and cut by a pelletizer to obtain a polypropylene composition in a pellet form. The different compositions thus produced were evaluated by the procedure described later. The results of the evaluation are also shown in Table 1.

[Examples 2 and 4 and Comparative Example 7]

Polypropylene compositions were produced and evaluated by the same procedure as in Example 1, except that the polymerization conditions were varied as shown in Table 1 and that in the process of melt-kneading of the resulting resin components, 0.20 parts by weight of a crystal nucleating agent, *i.e.,* ADK STAB NA18 (phosphoric ester-based nucleating agent) produced by ADEKA Corporation and 1.0 parts by weight of a filler, *i.e.,* HTP05L (talc) produced by IMI Fabi S.p.A., were additionally compounded to 100 parts by weight of the resin components.

[Comparative Example 1]

A Ziegler-Natta catalyst was produced according to the procedure disclosed in European Patent Publication No. EP 728769, Example 5, lines 48-55. A comparative polypropylene composition was produced using this catalyst and evaluated by the same procedure as in Example 1, except that the hydrogen concentration in the first-stage reactor and the hydrogen concentration and C2/(C2+C3) molar ratio in the second-stage reactor were set to the values shown in Table 1, and that 0.20 parts by weight of a crystal nucleating agent, *i.e.,* ADK STAB NA18 (phosphoric ester-based nucleating agent) produced by ADEKA Corporation, and 1.0 parts by weight of a filler, *i.e.,* HTP05L (talc) produced by IMI Fabi S.p.A., were added to 100 parts by weight of the resin components.

[Comparative Example 2]

A comparative polypropylene composition was produced and evaluated by the same procedure as in Comparative Example 1, except that the hydrogen concentration in the first-stage reactor and the hydrogen concentration and C2/(C2+C3) molar ratio in the second-stage reactor were set to the values shown in Table 1, and that neither a filler nor crystal nucleating agents were added.

[Comparative Example 3]

A comparative polypropylene composition was produced and evaluated by the same procedure as in Comparative Example 1, except that the hydrogen concentration in the first-stage reactor and the H2/C2 and C2/(C2+C4) molar ratios in the second-stage reactor, to which 1-butene instead of propylene was fed, were set to the values shown in Table 1, and that 0.20 parts by weight of a crystal nucleating agent, *i.e.,* ADK STAB NA18 (phosphoric ester-based nucleating agent) produced by ADEKA Corporation, was added to 100 parts by weight of the resin components, and no filler was added.

[Comparative Examples 4 and 5]

Comparative polypropylene compositions were produced and evaluated by the same procedure as in Comparative Example 3, except that in the process of melt-kneading of the resulting resin components, 10 parts by weight

(Comparative Example 4) or 20 parts by weight (Comparative Example 5) of a filler, *i.e.,* HTP05L (talc) produced by IMI Fabi S.p.A., was additionally compounded to 100 parts by weight of the resin components.

[Comparative Example 6]

A polymer composed of homo-polypropylene and an ethylene/1-butene copolymer was produced by the same procedure as in Comparative Example 3, except that the hydrogen concentration in the first-stage reactor and the C2/(C2+C4) molar ratio in the second-stage reactor were set to 0.04 mol.% and 0.48, respectively, and that the residence time distributions at the first and second stages were adjusted so as to give a specified ratio of component (1) to component (2). To a total of 100 parts by weight of a mixture consisting of 30 parts by weight of the resulting polymer with a MFR of 3.0, 40 parts by weight of PX600N (homo-polypropylene with a MFR of 7.5) produced by SunAllomer Ltd., and 30 parts by weight of the polymer produced in Comparative Example 1, 0.20 parts by weight of an antioxidant, *i.e.,* B225 produced by BASF, and 0.05 parts by weight of a neutralizer, *i.e.,* calcium stearate produced by Tannan Kagaku Kogyo Co., Ltd. were added, and the contents were stirred and mixed for 1 minute using a Henschel mixer. Then, by following the same procedures as in Example 1, the mixture was melt-kneaded and pelletized and the resulting composition was evaluated.

[Measurement conditions]

1) MFR

MFR measurement was done at a temperature of 230°C under a load of 2.16 kg according to JIS K7210-1.

2) Ethylene-derived unit content in component (2) and amount of component (2) in polypropylene composition

$^{13}$C- NMR measurements were performed on a sample dissolved in a mixed solvent of 1,2,4-trichlorobenzene and deuterated benzene at 120 ° C. The $^{13}$C-NMR spectra were acquired on a Bruker AVANCE III HD 400 spectrometer operating at $^{13}$C resonance frequency 100 MHz using a flip angle of 45°, a pulse interval of 7 seconds, a sample rotation number of 20 Hz, and an accumulation number of 5000 times.

2-1) The case when component (2) is an ethylene/propylene copolymer

Using the spectrum obtained above, the total ethylene content in the composition (% by weight) was determined by the method described in the literature: M. Kakugo, Y. Naito, K. Mizunuma and T. Miytake, Macromolecules, 15, 1150-1152 (1982). The ethylene-derived unit content of the component (2) of the composition (% by weight) was calculated in the same manner as the total ethylene-derived unit content except that the integrated intensity of $T'_{\beta\beta}$ obtained by the following formula was used instead of the integral intensity of $T_{\beta\beta}$ obtained above.

$$T'_{\beta\beta} = 0.98 \times S_{\alpha\gamma} \times A / (1 - 0.98 \times A)$$

Where $A = S_{\alpha\gamma} / (S_{\alpha\gamma} + S_{\alpha\delta})$ The amount of the component (2) in the composition was obtained by the following equation. Amount of component (2) (% by weight) = Total ethylene-derived unit content / (Ethylene-derived unit content of component (2) / 100)

2-2) The case when component (2) is an ethylene/1-butene copolymer

The same method described in the page 15-16 of WO 2011/134897 was used to determine the ethylene-derived unit content of the component (2) of the composition. Diad distribution was calculated from the $^{13}$C NMR spectra obtained above using the following relations:

$$PP = 100\ I_1 / \Sigma$$

$$PB = 100\ I_2 / \Sigma$$

$$BB = 100\ (I_3 - I_{19}) / \Sigma$$

$$PE = 100\ (I_5 + I_6) / \Sigma$$

$$BE = 100\ (I_9 + I_{10}) / \Sigma$$

$$EE = 100\ (0.5(I_{15} + I_6 + I_{10}) + 0.25\ (I_{14}))/\Sigma$$

Where $\Sigma = I_1 + I_2 + I_3 - I_{19} + I_5 + I_6 + I_9 + I_{10} + 0.5\ (I_{15} + I_6 + I_{10}) + 0.25\ (I_{14})$ The molar content was obtained from diads using the following relations:

$$P\ (mol\%) = PP + 0.5\ (PE+PB)$$

$$B\ (mol\%) = BB + 0.5\ (BE+PB)$$

$$E\ (mol\%) = EE + 0.5\ (PE+BE)$$

$I_1$, $I_2$, $I_3$, $I_5$, $I_6$, $I_9$, $I_{10}$, $I_{14}$, $I_{15}$, $I_{19}$ are integrals of the peaks in the $^{13}C$ NMR spectrum (peak of EEE sequence at 29.9 ppm as reference). The assignments of these peaks are made according to J.C. Randal, Macromol. Chem Phys., C29, 201 (1989), M. Kakugo, Y. Naito, K. Mizunuma and T. Miyatake, Macromolecules, 15, 1150 (1982), and H.N. Cheng, Journal of Polymer Science, Polymer Physics Edition, 21, 57 (1983). They are collected in Table A (nomenclature according to C.J. Carman, R.A. Harrington and C.E. Wilkes, Macromolecules, 10, 536 (1977)). The ethylene-derived unit content of the component (2) of the composition was obtained by the following equation.

$$\text{Ethylene-derived unit content of the component (2) (\% by weight)} = 100\ E\ (wt\%) / (\ E\ (wt\%) + B\ (wt\%)\ )$$

Where E (wt%) and B (wt%) were ethylene- and 1-butene- derived unit converted to % by weight, respectively.
The amount of the component (2) in the composition was obtained by the following equation.

$$\text{Amount of component (2) (\% by weight)} = E\ (wt\%) + B\ (wt\%)$$

3) Intrinsic viscosity of xylene solubles (XSIV) of polypropylene composition

Xylene solubles were obtained from the polypropylene resin samples and measured for their intrinsic viscosity (XSIV) by following the procedure described below.
First, 2.5 g of a polypropylene sample was put into a flask containing 250 mL of o-xylene (solvent), and the contents were stirred at 135°C for 30 minutes under nitrogen purging using a hot plate and a reflux condenser, whereby the composition was dissolved completely; thereafter, the solution was cooled at 25°C for one hour. The resulting solution was filtered through paper filter. 100 mL of the filtrate obtained after filtration was collected, transferred to an aluminum cup or the like, evaporated to dryness at 140°C under nitrogen purging, and left to stand at room temperature for 30 minutes, whereby xylene solubles were obtained.
Intrinsic viscosity measurement was done in tetrahydronaphthalene at 135°C using an automatic capillary viscometer (SS-780-H1, produced by Shibayama Scientific Co., Ltd.).

4) Mw/Mn of xylene insolubles (XI)

When the xylene solubles were filtered as described above, residues (a mixture of xylene insolubles and the solvent) remaining on the paper filter were collected. After acetone was added to the residues, the mixture was filtrated

through the filter, and components that did not pass though the filter were evaporated to dryness in a vacuum drying oven set at 80°C to thereby obtain xylene insolubles (XI).

The thus-obtained xylene insolubles were used as a sample and measured for molecular weight distribution (Mw/Mn) as described below. Mw/Mn is a value obtained through measurement of weight-average molecular weight (Mw) and number-average molecular weight (Mn) by gel permeation chromatography (GPC). PL GPC220 produced by Polymer Laboratories Ltd. was used as a GPC system, and 1,2,4-trichlorobenzene containing an antioxidant was used as a mobile phase. The columns used were UT-G (one column), UT-807 (one column) and UT-806M (two columns) produced by Showa Denko K.K., which were connected in series. A differential refractometer was used as a detector. The same solvent as used as a mobile phase was also used to prepare a sample solution of xylene insolubles. The xylene insolubles were dissolved in the solvent with shaking at 150°C for 2 hours at a sample concentration of 1 mg/mL to thereby prepare a sample for measurement. 500 μL of the thus-obtained sample solution was injected into the columns and measurement was performed at a flow rate of 1.0 mL/min., a temperature of 145°C, and a data collection interval of 1 sec. Column calibration was performed using polystyrene standards with molecular weights of 580 to $745 \times 10^4$ (Shodex STANDARD, produced by Showa Denko K.K.) based on the cubic spline technique. The Mark-Houwink-Sakurada coefficients used were $K=1.21 \times 10^{-4}$, a=0.707 for polystyrene standards, and $K=1.37 \times 10^{-4}$, a=0.75 for polypropylene-based polymers.

5) Gloss

Small plate test pieces (type D2) with a thickness of 2 mm as per JIS K7152-3 were prepared using an injection molding machine (FANUC ROBOSHOT S-2000i produced by Fanuc Corporation). According to JIS Z8741, the opposite surface of the test pieces to the gate was measured using a gloss meter (GM-26PRO) produced by Murakami Color Research Laboratory Co., Ltd. to determine the specular gloss of the test pieces at an incident angle of 60°. The molding conditions were as follows.

Molten resin temperature: 230°C for compositions with a MFR < 7 g/10 min., and 200°C for compositions with a MFR ≥ 7 g/10 min.

Mold temperature: 40°C
Average injection speed: 200 mm/sec.
Hold pressure time: 40 sec.
Total cycle time: 60 sec.

6) Flexural modulus

According to JIS K6921-2, multi-purpose test pieces (type A1) as per JIS K7139 were injection-molded from each of polypropylene composition samples using an injection molding machine (FANUC ROBOSHOT S-2000i produced by Fanuc Corporation), and processed into a dimension of 10 mm wide, 4 mm thick and 80 mm long to obtain test pieces (type B2) for measurement. The type B2 test pieces were measured for flexural modulus using a precision universal testing machine (Autograph AG-X 10kN) produced by Shimadzu Corporation under the following conditions: temperature, 23°C; relative humidity, 50%; length of span between supports, 64 mm; and test speed, 2 mm/min.

7) Spiral flow

Molding flowability was evaluated by spiral flow testing.

The values of spiral flow were determined by measuring the flow length of injection-molded articles obtained using an injection molding machine (FANUC ROBOSHOT α-100C produced by Fanuc Corporation) equipped with a spiral flow mold (flow path cross-sectional profile: a trapezoid with an upper base length of 8 mm, a lower base length of 10 mm, and a height of 2 mm) having an Archimedes spiral formed thereon. The molding conditions were as follows.

| | |
|---|---|
| Cylinder temperature: | 230°C |
| Mold temperature: | 40°C |
| Injection pressure: | 73.5 MPa |
| Injection speed: | 10 mm/sec. |
| Hold pressure: | 73.5 MPa (for 3 sec.) |
| Cooling time: | 8 sec. |

8) Charpy impact strength

Type A test pieces were obtained by the same procedure as that for the test pieces used for flexural modulus measurement, and according to JIS K7111-1, the test pieces were processed into a dimension of 10 mm wide, 4 mm thick and 80 mm long and then cut to form a notch 2 mm deep in width direction using a notching tool A-3 produced by Toyo Seiki Seisaku-sho, Ltd., whereby test pieces for measurement having form A were obtained. According to JIS K6921-2, the obtained test pieces were measured for Charpy impact strength using a digital impact tester DG-UB produced by Toyo Seiki Seisaku-sho, Ltd. under the following conditions: temperature, 23°C; edge-wise impact; and 1eA method.

9) Puncture resistance

Flat plates of 130 mm × 130 mm × 2.0 mm were prepared using an injection molding machine (FANUC ROBOSHOT α-100C produced by Fanuc Corporation). With the use of Hydroshot HITS-P10 produced by Shimadzu Corporation, each test piece for measurement was placed on a support with a hole of 40 mmφ internal diameter in a thermostatic bath controlled at -10°C, secured with a sample holder of 76 mmφ internal diameter, and then struck by a striker of 12.7 mmφ diameter with a hemispherical striking face at an impact velocity of 1 m/sec. to determine puncture energy (J) according to JIS K7211-2. An average of the puncture energy values obtained for four test pieces was calculated as a puncture resistance and used as an index for low temperature impact resistance.

The molding conditions were as follows.

| | |
|---|---|
| Molten resin temperature: | 230°C |
| Mold temperature: | 40°C |
| Average injection speed: | 35 mm/sec. |
| Hold pressure time: | 10 sec. |
| Total cycle time: | 45 sec. |

[Table 1]

| | | Examples | | | | Comparative Examples | | | | | | |
|---|---|---|---|---|---|---|---|---|---|---|---|---|
| | | 1 | 2 | 3 | 4 | 1 | 2 | 3 | 4 | 5 | 6 | 7 |
| Polymerization | Catalyst 1) | Suc | Suc | Suc | Suc | Ph | Ph | Ph | Ph | Ph | Ph | Suc |
| | Hydrogen conc. at 1st stage (mol.%) | 0.24 | 0.30 | 0.26 | 0.23 | 0.93 | 1.11 | 0.40 | | | - | 0.25 |
| | H2/C2 at 2nd stage (molar ratio) | 0.232 | 0.232 | 0.332 | 0.332 | - | - | 0.249 | | | - | |
| | Hydrogen conc. at 2nd stage (mol.%) | | | | - | 1.33 | 2.45 | - | | | - | 1.75 |
| | C2/(C2+C3(C4)) at 2nd stage (molar ratio) | 0.68 | 0.68 | 0.72 | 0.72 | 0.43 | 0.40 | 0.59 | | | - | 0.02 |
| Composition | Ethylene content in component (1) (wt%) | 0 | 0 | 0 | 0 | 0 | 0 | 0 | | | 0/0 | 0 |
| | Type of component (2) 2) | C2C3 | C2C3 | C2C3 | C2C3 | C2C3 | C2C3 | C2C4 | | | C2C3/C2C4 | C2C3 |
| | Ethylene content in component (2) (wt. %) | 72 | 72 | 76 | 76 | 44 | 41 | 81 | | | 44/75 | 6 |
| | Content of component (2) (wt%) | 21 | 18 | 22 | 18 | 13 | 19 | 34 | | | 13/30 | 10 |
| | XSIV (dl/g) | 1.7 | 1.7 | 1.4 | 1.4 | 2.8 | 2.0 | 1.2 | | | 2.8/1.2 | 2.4 |
| | XIMw/Mn | 10 | 10 | 10 | 10 | 5 | 5 | 5 | | | 7 | 10 |
| | MFR (g/10min) | 9 | 12 | 12 | 9 | 20 | 30 | 18 | | | 7 | 8 |
| | Crystal nucleating agent (parts by wt) | 0 | NA18: 0.20 | 0 | NA18: 0.20 | NA18:0.20 | 0 | NA18:0.20 | | | 0 | NA18:0.20 |
| | Talc (parts by wt.) | 0 | 1.0 | 0 | 1.0 | 1.0 | 0 | 0 | 10 | 20 | 0 | 1.0 |

(continued)

| | | Examples | | | | Comparative Examples | | | | | | |
|---|---|---|---|---|---|---|---|---|---|---|---|---|
| | | 1 | 2 | 3 | 4 | 1 | 2 | 3 | 4 | 5 | 6 | 7 |
| Properties | Gloss (60° ) | 91 | 91 | 92 | 90 | 80 | 82 | 86 | 82 | 74 | 85 | 88 |
| | Flexural modulus (MPa) | 1470 | 1790 | 1510 | 1870 | 1700 | 1170 | 1110 | 1440 | 1790 | 1440 | 1710 |
| | Charpy impact strength @ 23° C ($KJ/m^2$) | 6 | 6 | 4 | 4 | 7 | 7 | 41 | 10 | 9 | 7 | 6 |
| | Puncture resistance @ -10° C (J) | 17 | 14 | 16 | 11 | 15 | >25 | >25 | 9 | 14 | 16 | <0.5 |
| | Spiral flow (cm) | 56 | 60 | 60 | 56 | 61 | 70 | 63 | - | - | 48 | 54 |
| | | | | | | | | | | | | |
| | 1) Suc: Catalyst using a succinate-based compound Ph: Catalyst using a phthalate-based compound | | | | | | | | | | | |
| | 2) C2C3: Ethylene/propylene copolymer C2C4: Ethylene/1-butene copolymer | | | | | | | l | | | | |

As shown in Table 1, it is evident that the polypropylene composition of the present invention can provide a molded article having high gloss and excellent balance between stiffness and low temperature impact resistance by maintaining flowability.

## Claims

1. A polypropylene composition comprising:

   as component (1), a propylene (co)polymer containing 0 to 0.5% by weight of an ethylene-derived unit; and
   as component (2), an ethylene/propylene copolymer containing 65 to 85% by weight of an ethylene-derived unit;
   wherein the polypropylene composition satisfies the following requirements:

   1) the Mw/Mn value of xylene insolubles (XI) of the composition as measured by GPC is in the range of 6 to 20,
   2) the weight ratio of component (1) to component (2) is in the range of 70:30 to 85:15,
   3) the intrinsic viscosity of xylene solubles (XSIV) of the composition is in the range of 1.0 to 3.0 dl/g,
   4) the MFR (at 230°C under a load of 2.16 kg) of the composition is in the range of 3 to 15 g/10 min.

2. The polypropylene composition according to claim 1, wherein components (1) and (2) are polymers obtained by polymerizing propylene and ethylene using a catalyst comprising: (a) a solid catalyst comprising, as essential components, magnesium, titanium, a halogen, and an electron donor compound selected from succinate-based compounds, and (b) an organoaluminum compound, and optionally (c) an external electron donor compound.

3. The polypropylene composition according to claim 1 or 2, further comprising 0.01 to 1.0 parts by weight of a crystal nucleating agent based on a total of 100 parts by weight of component (1) and component (2).

4. The polypropylene composition according to any of claims 1 to 3, wherein the crystal nucleating agent is selected from phosphoric ester-based nucleating agents, triaminobenzene derivative-based nucleating agents, and combinations thereof.

5. The polypropylene composition according to any of claims 1 to 4, further comprising not more than 2 parts by weight of a plate-like inorganic filler based on a total of 100 parts by weight of component (1) and component (2).

6. An injection-molded article of the polypropylene composition according to any of claims 1 to 5.

## Patentansprüche

1. Polypropylenzusammensetzung, umfassend:

   als Komponente (1) ein Propylen(co)polymer, das 0 bis 0,5 Gew.% einer von Ethylen abgeleiteten Einheit enthält; und
   als Komponente (2) ein Ethylen/Propylen-Copolymer, das 65 bis 85 Gew.% einer von Ethylen abgeleiteten Einheit enthält;
   wobei die Polypropylenzusammensetzung die folgenden Anforderungen erfüllt:

   1) der Wert von Mw/Mn der in Xylol unlöslichen Materialien (XI) der Zusammensetzung, gemessen mittels GPC, liegt im Bereich von 6 bis 20,
   2) das Gewichtsverhältnis von Komponente (1) zu Komponente (2) liegt im Bereich von 70:30 bis 85:15,
   3) die Grenzviskosität der in Xylol löslichen Materialien (XSIV) der Zusammensetzung liegt im Bereich von 1,0 bis 3,0 dl/g,
   4) die MFR (bei 230 °C unter einer Last von 2,16 kg) der Zusammensetzung liegt im Bereich von 3 bis 15 g/10 min.

2. Polypropylenzusammensetzung nach Anspruch 1, wobei die Komponenten (1) und (2) Polymere sind, die durch Polymerisieren von Propylen und Ethylen unter Verwendung eines Katalysators erhalten wurden, der umfasst: (a) einen festen Katalysator, der als essentielle Komponenten Magnesium, Titan, ein Halogen und eine Elektronendonorverbindung umfasst, die ausgewählt ist aus Verbindungen auf Succinatbasis, und (b) eine Organoaluminiumverbindung und gegebenenfalls (c) eine externe Elektronendonorverbindung.

**3.** Polypropylenzusammensetzung nach Anspruch 1 oder 2, des Weiteren umfassend 0,01 bis 1,0 Gewichtsteile eines Kristallkeimbildners, bezogen auf insgesamt 100 Gewichtsteile von Komponente (1) und Komponente (2).

**4.** Polypropylenzusammensetzung nach einem der Ansprüche 1 bis 3, wobei der Kristallkeimbildner ausgewählt ist aus Keimbildnern auf Phosphorsäureesterbasis, Keimbildnern auf Basis von Triaminobenzolderivat sowie Kombinationen davon.

**5.** Polypropylenzusammensetzung nach einem der Ansprüche 1 bis 4, des Weiteren umfassend nicht mehr als 2 Gewichtsteile eines plättchenartigen anorganischen Füllstoffs, bezogen auf insgesamt 100 Gewichtsteile von Komponente (1) und Komponente (2).

**6.** Spritzgießartikel aus der Polypropylenzusammensetzung nach einem der Ansprüche 1 bis 5.

**Revendications**

**1.** Composition de polypropylène comprenant :

en tant que constituant (1), un (co)polymère de propylène contenant 0 à 0,5 % en poids d'un motif dérivé d'éthylène ; et
en tant que constituant (2), un copolymère d'éthylène/propylène contenant 65 à 85 % en poids d'un motif dérivé d'éthylène ;
la composition de polypropylène satisfaisant aux exigences suivantes :

1) la valeur Mw/Mn des insolubles dans le xylène (XI) de la composition telle que mesurée par CPG est située dans la plage de 6 à 20,
2) le rapport pondéral du constituant (1) au constituant (2) est situé dans la plage de 70:30 à 85:15,
3) la viscosité intrinsèque des solubles dans le xylène (XSIV) de la composition est située dans la plage de 1,0 à 3,0 dl/g,
4) le MFR (indice de fluidité à chaud - à 230 °C sous une charge de 2,16 kg) de la composition est situé dans la plage de 3 à 15 g/10 min.

**2.** Composition de polypropylène selon la revendication 1, les constituants (1) et (2) étant des polymères obtenus par polymérisation de propylène et d'éthylène à l'aide d'un catalyseur comprenant : (a) un catalyseur solide comprenant, en tant que constituants essentiels, du magnésium, du titane, un halogène et un composé donneur d'électrons choisi parmi des composés à base de succinate et (b) un composé d'organoaluminium et éventuellement (c) un composé donneur d'électrons externe.

**3.** Composition de polypropylène selon la revendication 1 ou 2, comprenant en outre 0,01 à 1,0 partie en poids d'un agent de nucléation de cristaux sur la base d'un total de 100 parties en poids du constituant (1) et du constituant (2 ).

**4.** Composition de polypropylène selon l'une quelconque des revendications 1 à 3, l'agent de nucléation de cristaux étant choisi parmi les agents de nucléation à base d'ester phosphorique, les agents de nucléation à base de dérivé de triaminobenzène et les combinaisons de ceux-ci.

**5.** Composition de polypropylène selon l'une quelconque des revendications 1 à 4, comprenant en outre 2 parties en poids ou moins d'une charge inorganique de type plaque sur la base d'un total de 100 parties en poids du constituant (1) et du constituant (2).

**6.** Article moulé par injection de la composition de polypropylène selon l'une quelconque des revendications 1 à 5.

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 2011140640 A
- JP 2016089176 A
- JP 2002542347 A
- WO 2009069483 A
- WO 2009057747 A
- JP 2005306910 A
- JP 2004131537 A
- JP 2013028704 A
- JP 2014201602 A
- JP 2013028705 A
- JP 4959920 B
- WO 2010078494 A
- JP 2002520426 A
- WO 2009050045 A
- EP 728769 A
- WO 2011134897 A


### Non-patent literature cited in the description


- **M. KAKUGO ; Y. NAITO ; K. MIZUNUMA ; T. MIYTAKE.** *Macromolecules,* 1982, vol. 15, 1150-1152
- **J.C. RANDAL.** *Macromol. Chem Phys.,* 1989, vol. C29, 201
- **M. KAKUGO ; Y. NAITO ; K. MIZUNUMA ; T. MIYATAKE.** *Macromolecules,* 1982, vol. 15, 1150
- **H.N. CHENG.** *Journal of Polymer Science, Polymer Physics Edition,* 1983, vol. 21, 57
- **C.J. CARMAN ; R.A. HARRINGTON ; C.E. WILKES.** *Macromolecules,* 1977, vol. 10, 536